# EUROPÄISCHE PATENTSCHRIFT

(11) **EP 2 690 024 B1**
(45) Veröffentlichungstag und Bekanntmachung des Hinweises auf die Patenterteilung: **23.03.2016**
(21) Anmeldenummer: 13175100.0
(22) Anmeldetag: 04.07.2013
(51) Int. Cl.: B65B 49/10, B65B 49/14, B65B 59/00, B65B 59/04, B65G 19/26, B65B 5/02, B65B 49/00, B65B 49/08, B65B 49/12, B31B 1/00, B31B 1/26

(54) **Faltvorrichtung mit einer Kette und daran lösbar befestigten Schub- oder Faltelementen**
Folding device with a chain and pushing or folding elements attached to thereto in a detachable manner
Dispositif de pliage avec une chaîne comportant des éléments amovibles de déplacement ou de pliage.

(30) Priorität: 23.07.2012 DE 202012102759 U
(43) Veröffentlichungstag der Anmeldung: 29.01.2014
(73) Patentinhaber: Krones Aktiengesellschaft, 93073 Neutraubling (DE)
(72) Erfinder: Wimmer, Thomas, 93073 Neutraubling (DE)
(74) Vertreter: Benninger, Johannes

(56) Entgegenhaltungen:
- EP-A1- 0 479 498
- EP-A1- 0 861 786
- EP-A1- 2 444 323
- DE-A1- 19 727 355
- DE-A1-102004 004 357
- US-A- 4 501 351

## Beschreibung

Die vorliegende Erfindung betrifft eine Faltvorrichtung zum Umschlagen eines Abschnittes oder einer Lasche einer Umverpackung für Artikel mit den Merkmalen des unabhängigen Anspruchs 1.

In der Verpackungsindustrie wird häufig eine Mehrzahl von gleichartigen Produkten wie bspw. Getränkebehälter oder Gebinde mit jeweils mehreren Getränkebehältern zusammengefasst und in einem Karton verpackt oder auf einer tablettähnlichen Unterlage - einem sog. Tray - angeordnet. Zu diesem Zweck können entsprechend vorkonfektionierte Kartonzuschnitte eingesetzt werden. Die Produkte werden bspw. in eine gewünschte regelmäßige Anordnung gebracht und zusammengestellt und danach auf dem Kartonzuschnitten positioniert, wonach die Kartonzuschnitte um die Produkte herum gefaltet und befestigt werden, bspw. durch Verkleben überlappender Kartonstücke.

Um die vordere und die hintere untere Lasche eines Tabletts nach oben zu falten, offenbart bspw. die US 4 642 967 A einen Rückhaltefinger und einen Faltfinger, die an einer gemeinsamen umlaufenden Förderkette angeordnet sind.

Weiterhin zeigt die US 3 555 776 A eine Maschine zur Bildung eines Tabletts um eine Gruppe von Artikeln herum. Die Maschine weist anführende Faltfinger für das Hochklappen der vorderen Kartonlasche und nachfolgende Faltfinger für das Hochklappen der hinteren Kartonlasche auf, die jeweils an einer umlaufenden Förderkette angeordnet sind.

Die EP 0 479 498 A1 beschreibt ein Verpackungsverfahren und eine entsprechende Vorrichtung zum Einschlagen von Seitenlaschen einer Umverpackung von Artikeln, insbesondere einer Folienverpackung. Die Seitenlaschen werden dabei von Bürsten eingeschlagen, welche jeweils von einer Haltevorrichtung getragen werden. Die Haltevorrichtung selbst wird zwischen zwei Förderketten eingebracht und mittels Haltestiften in den Gliederhülsen der jeweiligen Förderkette verrastet. Der Ausrastvorgang erfolgt, indem durch Betätigen von mit den Haltestiften verbundenen Greifelementen entgegen der Kraft von an der anderen Seite der Greifelemente angelagerten Federn die Haltestifte aus den Hülsen der Förderkettenglieder entfernt werden.

Die EP 0 861 786 A1 beschreibt eine Vorrichtung zum Herstellen von Verpackungen in der Zigarettenindustrie. Bestandteil dieser Vorrichtung ist ein in einem Schlitten beweglicher Stößel, welcher am hinteren Ende mit einem plattenförmigen Querstück verschraubt ist. In die Rückseite des Schlittens und plan mit diesem abschließend sind zwei Dauermagnete eingebracht, welche mit dem Querstück des Stößels magnetschlüssig verbunden sind.

Die US 4 501 351 A offenbart eine Rollenkette mit speziell ausgebildeten, hohlen Kettenaußenhülsen und mit einer Aufnahme versehenen Innenhülsen zur Verbindung mit externen Anbauteilen. Beschrieben werden Module, die an der Kette befestigt und wieder entfernt werden können. Hierzu weisen die Module eine Platte und einen Stift auf, wobei der Stift des Moduls in seitlicher Richtung in die Aufnahmen der Innenhülsen gesteckt werden kann. Das Modul kann durch Verwendung einer magnetischen Platte oder eines magnetischen Stifts an der Kette gesichert werden.

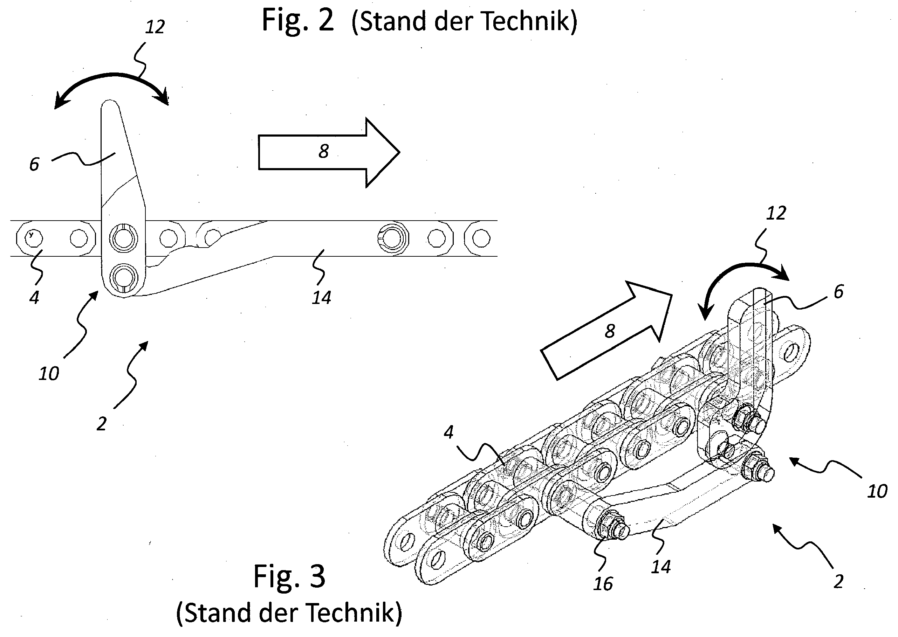

Eine aus dem Stand der Technik bekannte Faltvorrichtung 2 mit einer umlaufenden Förderkette 4 und einem von mehreren daran schwenkbar gelagerten Faltfingern 6 geht aus der schematischen Seitenansicht der Fig. 2 sowie aus der perspektivischen Ansicht der Fig. 3 hervor. Der bei horizontal in Transportrichtung 8 bewegter Förderkette 4 vertikal nach oben ragende Faltfinger 6 weist eine Schwenklagerung 10 auf, über die er in Pfeilrichtung 12 in einer vertikalen Ebene verschwenkt werden kann, die parallel zur Transportrichtung 8 liegt. An einem nach unten über die Höhe bzw. den Umriss der Förderkette 4 ragenden Abschnitt ist der Faltfinger 6 mit einer Koppelstange 14 schwenkbar verbunden, die wiederum schwenkbar an einem vom Faltfinger 6 und dessen Schwenklagerung 10 entfernten Kettenglied der Förderkette 4 angelenkt ist. Die Koppelstange 14 sorgt für die Schwenkbewegung des oberen Abschnittes des Faltfingers 6 in Pfeilrichtung 12, sobald die Förderkette umgelenkt wird und dadurch eine Schub- oder Zugbewegung auf die Schwenklagerung 10 des Faltfingers 6 bewirkt, wodurch dem Faltfinger 6 eine gewünschte Bewegungsrichtung zum Umschlagen eines Kartonabschnittes der Umverpackung aufgeprägt wird.

Bei solchen sog. Förder- oder Schließketten, wie sie in den Figuren 2 und 3 beispielhaft dargestellt sind, kann es bei einem Produktwechsel und der damit einhergehenden Größenänderung der zu behandelnden Umverpackung erforderlich sein, die Teilungsabstände zwischen aufeinander folgenden Faltfingern zu ändern. Verschiedene Teilungsabstände in einer Maschine erfordern einen Wechsel der jeweils eingesetzten Förder- oder Schließketten, sofern nicht bereits durch Entfernen einzelner Faltfinger eine gewünschte Änderung des Teilungsabstandes realisierbar ist. Wird eine geradzahlige Anzahl von Schubelementen bzw. Faltfingern eingesetzt, so können die Teilungsabstände auf diese Weise bspw. verdoppelt oder halbiert werden. So kann bei einem häufig eingesetzten 24-Zoll-Abstand bei einer Kette mit insgesamt 16 Faltfingern durch Entfernen jedes zweiten Faltfingers ein 48-Zoll-Abstand eingestellt werden. Ebenso kann durch zusätzliche Montage von 16 weiteren Faltfingern ein 12-Zoll-Abstand realisiert werden.

Um solche Teilungsänderungen zu realisieren, müssen die Faltfinger 6 an ihren Schwenklagerungen 10 einzeln demontiert werden, was durch die Verwendung herkömmlicher Sechskantschraubverbindungen 16 zwar möglich, aber sehr zeitaufwändig ist, wie die Fig. 3 erkennen lässt. Zusätzlich müssen auch die Koppelstangen 14 demontiert werden, damit sie nicht durch unkontrollierte Bewegungen den Kettenlauf stören können.

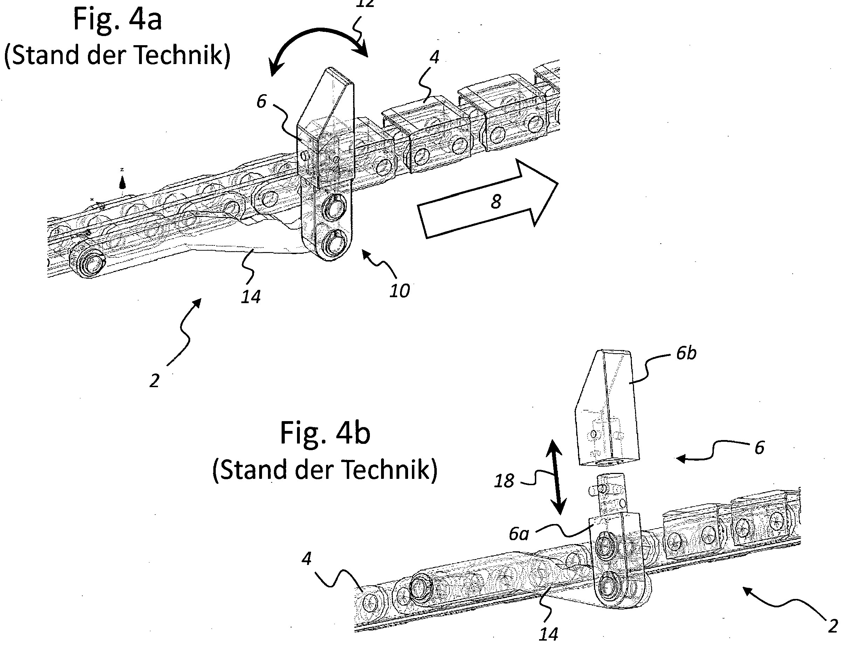

Eine alternative Variante zur Änderung des Teilungsabstandes besteht in der Verwendung mechanischer Stecksysteme, wie sie in den beiden Darstellungen der Fig. 4 gezeigt sind. Hierbei besteht der Faltfinger 6 aus einem Sockelabschnitt 6a, der fest mit der Förderkette 4 und der Koppelstange 14 verbunden bleibt, während ein lösbarer oberer Abschnitt 6b des Faltfingers 6 nach Lösen von Befestigungselementen mit geeignetem Werkzeug (nicht gezeigt) nach oben in paralleler Richtung 18 zur vertikalen Längserstreckungsrichtung des Faltfingers 6 vom Sockelabschnitt 6a abgezogen werden kann (Fig. 4b). Dieses Stecksystem ist relativ aufwändig in der Fertigung und benötigt zum Demontieren und Montieren der Faltfinger 6 ein geeignetes Werkzeug.

Ein Ziel der vorliegenden Erfindung besteht darin, eine Faltvorrichtung zum Umschlagen eines Abschnittes oder einer Lasche einer Umverpackung für Artikel zur Verfügung zu stellen, die eine Förder- oder Schließkette mit mehreren daran angeordneten Faltelementen wie Faltfingern o. dgl. aufweist, die mit geringem Arbeits- und Zeitaufwand und ohne Zuhilfenahme von Spezialwerkzeug zur Erzielung unterschiedlicher Teilungsabstände demontierbar und wieder montierbar sind.

Dieses Ziel der Erfindung wird durch eine Faltvorrichtung mit den Merkmalen des unabhängigen Anspruchs 1 erreicht. Weitere vorteilhafte Ausgestaltungen werden durch die Unteransprüche beschrieben. Zur Erreichung des genannten Ziels schlägt die Erfindung eine Faltvorrichtung zum Umschlagen eines Abschnittes oder einer Lasche einer Umverpackung für Artikel wie Getränkebehälter vor, die mindestens eine Förder-, Schub- und/oder Schließkette umfasst, die mehrere voneinander beabstandete Schub- oder Faltelemente aufweist, die jeweils in definierten Abständen voneinander an der Kette fixiert sind und einen über eine Förderebene der Kette ragenden Schub- oder Faltabschnitt aufweisen. Weiterhin sind Koppeleinrichtungen zum Verschwenken des Schub- oder Faltabschnittes der jeweiligen Schub- oder Faltelemente im Zusammenhang mit einer Richtungsänderung und/oder Umlenkung der Förder-, Schub- und/oder Schließkette vorhanden. Die Erfindung sieht vor, dass jedes Schub- oder Faltelement einen mit der Kette verbundenen und über das Koppelelement relativ zur Kettenlaufrichtung verschwenkbaren Trägerabschnitt sowie den an diesem verankerten und von diesem werkzeuglos lösbaren Schub- oder Faltabschnitt aufweist. Der Schub- oder Faltabschnitt ist form- und magnetschlüssig mit dem Trägerabschnitt verbunden und kann auf diese Weise ohne Zuhilfenahme von Werkzeug vom Trägerabschnitt abgenommen werden. Bei dem erfindungsgemäß lösbaren Faltfinger handelt es sich somit um eine Kombination aus Formschluss und Magnetverschluss. Die Baugruppe kann aus einer an der Kette fest montierten Träger- und Schwenkmechanik bestehen, die ein Aufnahmeteil umfasst. In Bohrungen des Aufnahmeteils können sich bspw. zwei Permanentmagneten befinden, welche das Wechselteil mit zwei Bolzen aufnehmen können. Das Wechselteil wird seitlich zur Bewegungsrichtung der Kette abgezogen und montiert. Varianten bei denen eine Abzugsrichtung nach oben oder in beliebige andere Richtungen erfolgen kann, fallen nicht unter die Erfindung.

Um ein werkzeugloses Wechseln der einzelnen Schub- oder Faltabschnitte - in der Regel sind dies sog. Faltfinger - der Faltvorrichtung zu ermöglichen, kann jeder Schub- oder Faltabschnitt mindestens einen ferromagnetischen Abschnitt aufweisen, der mit einem Permanentmagneten zusammenwirkt, der im Trägerabschnitt angeordnet ist. Hierbei kann der ferromagnetische Abschnitt mit einer Gegenfläche und/oder Gegenkontur am oder im Trägerabschnitt korrespondieren, so dass weder Einstellarbeiten notwendig noch Fehlmontagen möglich sind. Insbesondere kann wenigstens ein ferromagnetischer Bolzen am Schub- oder Faltabschnitt mit einer Aufnahme am oder im Trägerabschnitt korrespondieren, an deren Grund der Permanentmagnet platziert ist, so dass nach dem formschlüssigen Einschieben der Passteile die Permanentmagneten für die Verriegelung der lösbaren Verbindung sorgen. Selbstverständlich kann auch am lösbaren Abschnitt des Faltfingers ein Permanentmagnet angeordnet sein, der mit einem ferromagnetischen Abschnitt oder Bereich am Trägerabschnitt korrespondiert und zusammenwirkt.

Eine besonders zuverlässig funktionierende Variante der erfindungsgemäßen Faltvorrichtung kann vorsehen, dass der Schub- oder Faltabschnitt bzw. der lösbare Faltfinger zwei voneinander beabstandete und parallel angeordnete ferromagnetische Bolzen aufweist, die mit zwei entsprechend platzierten Aufnahmen am Trägerabschnitt korrespondieren. Diese parallelen Bolzen können wahlweise gleicher oder unterschiedlicher Größe sein, wobei ggf. nur einer davon mit einem Magneten zusammenwirkt, während der andere nur Führungsaufgaben übernimmt. Selbstverständlich können auch beide Bolzen - gleicher oder unterschiedlicher Größe - jeweils mit einem Permanentmagneten zusammenwirken, so dass eine noch stärkere Haftung als bei Verwendung nur eines Magneten sichergestellt ist. Die Montage- oder Einschubrichtung des Schub- oder Faltabschnittes erfolgt bei dieser Variante sinnvollerweise senkrecht zur Förderrichtung der Kette und der Wirkrichtung des Schub- oder Faltelements, wobei alternativ auch davon abweichende Montagerichtungen möglich sind, die jedoch u.U. einen höheren Fertigungsaufwand erfordern.

Damit sich die lösbaren Faltfinger keinesfalls im Betrieb von der Kette lösen, ist eine Lösekraft zur werkzeuglosen Demontage des Schub- oder Faltabschnittes vom Trägerabschnitt größer als eine Gegenkraft beim Falten oder Umlegen des Abschnittes oder der Lasche der Umverpackung. Auf diese Weise können Störungen im Betrieb zuverlässig verhindert werden.

Die Schub- oder Faltabschnitte können jeweils durch Faltfinger aus Metall, Kunststoff oder einem Verbundwerkstoff gebildet sein. Ein Teilungsabstand der Förder-, Schub- und/oder Schließkette kann durch Abnahme jedes zweiten Faltfingers bzw. Schub- oder Faltabschnittes vom an der Kette verbleibenden Trägerabschnitt verdoppelt werden. Bei Abnahme von jeweils zwei Faltfingern kann der Teilungsabstand auch verdreifacht werden. Werden die Trägerabschnitte in relativ engen Teilungsabständen montiert, so können zahlreiche unterschiedliche Teilungsabstände der Faltvorrichtung durch entsprechende Montage der Faltfinger an den gewünschten Positionen realisiert werden.

Selbstverständlich sind auch Abwandlungen der beschriebenen Ausführungsvarianten denkbar und vom Schutzumfang der Ansprüche mit umfasst. So können die Permanentmagneten auch am lösbaren Abschnitt des Faltfingers angeordnet sein, während eine ferromagnetische Gegenfläche am fest mit der Kette verbundenen Trägerabschnitt liegen kann. Darüber hinaus kann die Magnethalterung ggf. mit weiteren Sicherungseinrichtungen kombiniert werden, bspw. einem Bajonettverschluss, einem Schraubverschluss o. dgl.

Wenn im vorliegenden Zusammenhang von einem ferromagnetischen Bolzen oder ferromagnetischen Abschnitt die Rede ist, so bedeutet dies nicht, dass der gesamte Bolzen magnetisch sein muss. Es genügt, wenn ein mit dem Permanentmagneten zusammenwirkender und in Kontakt bringbarer Bereich entsprechende ferromagnetische Eigenschaften aufweist. Bei den Bolzen und damit korrespondierenden Aufnahmen handelt es sich in der Regel um zylindrisch geformte Elemente und Abschnitte, da diese einen relativ geringen Fertigungsaufwand erfordern. Selbstverständlich sind jedoch auch abweichende Geometrien mit nicht zylindrischen Körpern möglich. So kann der Bolzen bspw. auch konisch oder kegelstumpfförmig ausgebildet sein oder einen nicht kreisrunden Querschnitt aufweisen. Gleiches gilt für die entsprechenden Aufnahmen, in die der Bolzen bei Montage des Faltfingers eintaucht.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Ausführungsvariante einer erfindungsgemäßen Faltvorrichtung in schematischer Perspektivansicht.
Fig. 2 zeigt eine schematische Seitenansicht einer ersten Variante einer aus dem Stand der Technik bekannten Faltvorrichtung.
Fig. 3 zeigt eine schematische Perspektivansicht einer zweiten Variante einer aus dem Stand der Technik bekannten Faltvorrichtung.
Fig. 4 zeigt in zwei schematischen Perspektivansichten eine weitere Ausführungsvariante einer aus dem Stand der Technik bekannten Faltvorrichtung.

Die dargestellte Ausführungsform stellt lediglich ein Beispiel dar, wie die erfindungsgemäße Faltvorrichtung ausgestaltet sein kann. Eine abschließende Begrenzung ist damit nicht verbunden.

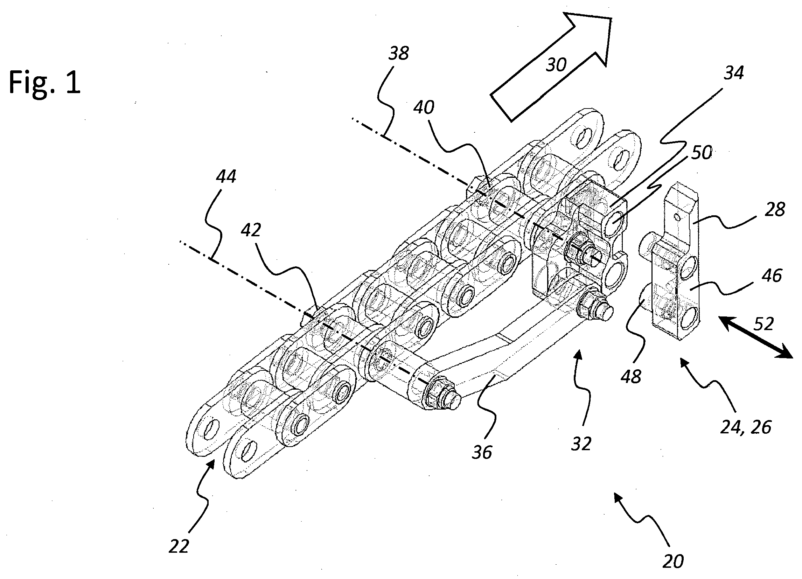

Die schematische Perspektivansicht der Fig. 1 zeigt eine Ausführungsvariante einer erfindungsgemäßen Faltvorrichtung 20, die dem Umschlagen eines hier nicht dargestellten Abschnittes oder einer Lasche einer Umverpackung für Artikel wie Getränkebehälter o. dgl. dient. Die Faltvorrichtung 20 umfasst eine umlaufende Förder-, Schub- und/oder Schließkette 22, die nachfolgend allgemein als Förderkette 22 bezeichnet ist, an der mehrere voneinander beabstandete Schub- oder Faltelemente 24 schwenkbar gelagert sind. Diese Schub- oder Faltelemente 24 werden nachfolgend vereinfachend als Faltfinger 26 bezeichnet. Die Schub- oder Faltelemente 24 bzw. die Faltfinger 26 sind jeweils in definierten Abständen voneinander an der Kette 22 fixiert und weisen einen über eine Förderebene der Kette 22 ragenden Schub- oder Faltabschnitt 28 auf, der in Kontakt mit den umzuschlagenden Laschen der Umverpackung kommt. Jeder der bei horizontal in Transportrichtung 30 bewegter Förderkette 22 vertikal nach oben ragende Faltfinger 26 weist eine Schwenklagerung 32 auf, über die er in einer vertikalen Ebene verschwenkt werden kann, die parallel zur Transportrichtung 30 liegt. Das Schub- oder Faltelement 24 umfasst einen schwenkbar an der Förderkette 22 gelagerten Trägerabschnitt 34, der mitsamt dem Faltfinger 26 über eine als Koppelstange 36 ausgebildeten Koppeleinrichtung im Zusammenhang mit einer Richtungsänderung und/oder Umlenkung der Förder-, Schub- und/oder Schließkette 22 verschwenkt werden kann. Die Koppelstange 36 sorgt für die Schwenkbewegung des oberen bzw. vom Trägerabschnitt 34 lösbaren Abschnittes 28 des Faltfingers 26, sobald die Förderkette 22 umgelenkt wird und dadurch eine Schub- oder Zugbewegung auf die Schwenklagerung 32 des Faltfingers 26 bewirkt, wodurch dem Faltfinger 26 eine gewünschte Bewegungsrichtung zum Umschlagen eines Kartonabschnittes der Umverpackung aufgeprägt wird.

Gemäß der vorliegenden Erfindung umfasst jedes der Schub- oder Faltelemente 24 einen mit der Kette 22 verbundenen und über das Koppelelement 36 relativ zur Kettenlaufrichtung 30 verschwenkbaren Trägerabschnitt 34 sowie den an diesem verankerten und von diesem werkzeuglos lösbaren Schub- oder Faltabschnitt 28, der den eigentlichen wechselbaren bzw. lösbaren Faltfinger 26 bildet. Wie es die Fig. 1 erkennen lässt, ist der Trägerabschnitt 34 schwenkbar an der Kette 22 gelagert, und zwar an einer der beiden Längsseiten der Kette 22, an der sich auch die Koppelstange 36 befindet, so dass sich durch deren Schub- oder Zugeinfluss eine Verschwenkbarkeit des Trägerabschnittes 34 innerhalb einer vertikalen, parallel zur Kettenlaufrichtung 30 angeordneten Schwenkebene ergibt. Die horizontal und senkrecht zur Kettenlaufrichtung 30 liegende Schwenkachse 38 der Schwenklagerung 32 fluchtet dabei mit einem der Kettenglieder 40, an dem auch der Trägerabschnitt 34 schwenkbar fixiert ist. Unterhalb der Schwenkachse 38 ist die Koppelstange 36 am Trägerabschnitt 34 angelenkt, die mit ihrem anderen Ende an einem um zwei Glieder beabstandeten Kettenglied 42 schwenkbar gelagert ist, und zwar um eine zweite Schwenkachse 44, die parallel zur ersten Schwenkachse 38 des Trägerabschnittes 34 angeordnet ist.

Damit die einzelnen Schub- oder Faltabschnitte 28 bzw. die lösbaren Faltfinger 26 vom Trägerabschnitt 34 getrennt werden können, weisen sie jeweils mindestens einen ferromagnetischen Abschnitt auf, der mit einem Permanentmagneten zusammenwirkt, der im Trägerabschnitt 34 angeordnet ist. Im gezeigten Ausführungsbeispiel weist der Schub- oder Faltabschnitt 28 einen Schaftbereich 46 mit zwei parallel angeordneten ferromagnetischen Bolzen 48 auf, die jeweils mit Aufnahmeöffnungen 50 im Trägerabschnitt 34 korrespondieren, an deren Grund der Permanentmagnet platziert ist, so dass nach dem formschlüssigen Einschieben der Passteile die Permanentmagneten für die Verriegelung der lösbaren Verbindung sorgen. Die entsprechenden Anlageflächen, die beim Einschieben der Bolzen 48 in die Aufnahmen 50 flächig aneinander liegen, sind parallel zueinander und senkrecht zur Längserstreckungsrichtung der Bolzen 48, so dass eine spielfreie formschlüssige Verbindung in exakt definierter Lage der beiden Fügeteile 46 und 34 zueinander gebildet wird.

Die parallel angeordneten Bolzen 48 weisen im gezeigten Ausführungsbeispiel gleiche Dimensionen auf, können jedoch wahlweise unterschiedliche Größen aufweisen, wobei ggf. nur einer davon mit einem Magneten zusammenwirkt, während der andere nur Führungsaufgaben übernimmt. Vorzugsweise jedoch wirken beide Bolzen 48, ob gleicher oder unterschiedlicher Größe, jeweils mit einem Permanentmagneten in der Aufnahmeöffnung 50 zusammen, so dass eine noch stärkere Haftung als bei Verwendung nur eines Magneten sichergestellt ist. Die Montage- oder Einschubrichtung 52 (Doppelpfeil in Fig. 1) des Schub- oder Faltabschnittes 24 erfolgt bei dieser Variante senkrecht zur Förderrichtung 30 der Kette 22 und senkrecht zur Wirkrichtung des Schub- oder Faltelements 24, so dass dieser bei laufender Kette 22 nicht aus seiner Fixierung gelöst werden kann. Damit sich die lösbaren Faltfinger 26 keinesfalls im Betrieb von der Kette 22 lösen, ist eine Lösekraft zur werkzeuglosen Demontage des Schub- oder Faltabschnittes 24 vom Trägerabschnitt 34 größer als eine Gegenkraft beim Falten oder Umlegen des Abschnittes oder der Lasche der Umverpackung. Auf diese Weise können Störungen im Betrieb zuverlässig verhindert werden.

Die Schub- oder Faltelemente 24 können jeweils durch Faltfinger 26 aus Metall, Kunststoff oder einem Verbundwerkstoff gebildet sein. Die Bolzen 48 können in dem Schaftabschnitt 46 eingepresst, eingeschraubt oder auch eingegossen sein. Die im Trägerabschnitt 34 befindlichen Permanentmagneten können bspw. eingeklebt, eingepresst oder auch eingeschraubt sein. Ein Teilungsabstand der Förder-, Schub- und/oder Schließkette 22 kann durch Abnahme jedes zweiten Faltfingers 26 bzw. Schub- oder Faltabschnittes 24 vom an der Kette 22 verbleibenden Trägerabschnitt 34 verdoppelt werden. Bei Abnahme von jeweils zwei Faltfingern 26 kann der Teilungsabstand auch verdreifacht werden. Werden die Trägerabschnitte 34 in relativ engen Teilungsabständen an der Kette 22 montiert, so können zahlreiche unterschiedliche Teilungsabstände der Faltvorrichtung 20 durch entsprechende Montage der Faltfinger 26 an den gewünschten Positionen realisiert werden.

Die Bolzen 48 können zylindrisch sein, ebenso wie die Aufnahmeöffnungen 50. Wahlweise jedoch sind auch konische oder kegelstumpfförmige Konturen mit kreisrunden, ovalen oder anders geformten Querschnitten der Bolzen 48 und Aufnahmen 50 möglich.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 2: Faltvorrichtung
- 4: Förderkette
- 6: Faltfinger
- 6a: Sockelabschnitt
- 6b: oberer Abschnitt
- 8: Transportrichtung
- 10: Schwenklagerung
- 12: Pfeilrichtung, Schwenkrichtung
- 14: Koppelstange
- 16: Sechskantschraube, Sechskantschraubverbindung
- 18: Montage-, Demontagerichtung

- 20: Faltvorrichtung
- 22: Förderkette, Förder-, Schub- und/oder Schließkette
- 24: Schubelemente, Faltelemente
- 26: Faltfinger
- 28: Schubabschnitt, Faltabschnitt, oberer Abschnitt
- 30: Transportrichtung, Kettenlaufrichtung
- 32: Schwenklagerung
- 34: Trägerabschnitt
- 36: Koppelstange, Koppelelement
- 38: erste Schwenkachse (der Schwenklagerung)
- 40: erstes Kettenglied
- 42: zweites Kettenglied
- 44: zweite Schwenkachse (der Koppelstange)
- 46: Schaftbereich
- 48: Bolzen, ferromagnetische Bolzen
- 50: Aufnahme, Aufnahmeöffnung
- 52: Montage- oder Einschubrichtung

## Patentansprüche

1. Faltvorrichtung (20) zum Umschlagen eines Abschnittes oder einer Lasche einer Umverpackung für Artikel wie Getränkebehälter, mit mindestens einer Förder-, Schub- und/oder Schließkette (22), die mehrere voneinander beabstandete Schub- oder Faltelemente (24) aufweist, die jeweils in definierten Abständen voneinander an der Kette (22) fixiert sind und einen über eine Förderebene der Kette (22) ragenden Schub- oder Faltabschnitt (28) aufweisen, und mit einer Koppeleinrichtung (36) zum Verschwenken des Schub- oder Faltabschnittes (28) der jeweiligen Schub- oder Faltelemente (24) im Zusammenhang mit einer Richtungsänderung und/oder Umlenkung der Förder-, Schub- und/oder Schließkette (22), wobei jedes Schub- oder Faltelement (24) einen mit der Kette (22) verbundenen und über das Koppelelement (36) relativ zur Kettenlaufrichtung (30) verschwenkbaren Trägerabschnitt (34) sowie den an diesem verankerten und von diesem werkzeuglos lösbaren Schub- oder Faltabschnitt (28) aufweist, **dadurch gekennzeichnet, dass** der jeweilige Schub- oder Faltabschnitt (28) form- und magnetschlüssig mit dem Trägerabschnitt (34) verbindbar und werkzeuglos von diesem lösbar ist, wobei eine Montage- oder Einschubrichtung (52) des Schub- oder Faltabschnittes (28) senkrecht zur Förderrichtung (30) der Kette (22) und der Wirkrichtung des Schub- oder Faltelements (24) ausgerichtet ist und der Schub- und Faltabschnitt (28) seitlich zur Bewegungsrichtung der Kette (22) abgezogen und montiert werden kann.

2. Faltvorrichtung nach Anspruch 1, bei welcher der Schub- oder Faltabschnitt (28) mindestens einen ferromagnetischen Abschnitt aufweist, der mit einem Permanentmagneten zusammenwirkt, der im Trägerabschnitt (34) angeordnet ist.

3. Faltvorrichtung nach Anspruch 2, bei welcher der ferromagnetische Abschnitt mit einer Gegenfläche und/oder Gegenkontur am oder im Trägerabschnitt (34) korrespondiert.

4. Faltvorrichtung nach Anspruch 2 oder 3, bei welcher wenigstens ein ferromagnetischer Bolzen (48) am Schub- oder Faltabschnitt (28) mit einer Aufnahme (50) am oder im Trägerabschnitt (34) korrespondiert, an deren Grund der Permanentmagnet platziert ist.

5. Faltvorrichtung nach Anspruch 2 oder 3, bei welcher der Schub- oder Faltabschnitt (28) zwei voneinander beabstandete und parallel angeordnete ferromagnetische Bolzen (48) aufweist, die mit zwei entsprechend platzierten Aufnahmen (50) am Trägerabschnitt (34) korrespondieren.

6. Faltvorrichtung nach Anspruch 1 oder 2, bei welcher eine Lösekraft zur werkzeuglosen Demontage des Schub- oder Faltabschnittes (28) vom Trägerabschnitt (34) größer ist als eine Gegenkraft beim Falten oder Umlegen des Abschnittes oder der Lasche der Umverpackung.

7. Faltvorrichtung nach Anspruch 1, bei welcher die Schub- oder Faltabschnitte (28) jeweils durch Faltfinger (26) aus Metall, Kunststoff oder einem Verbundwerkstoff gebildet sind.

8. Faltvorrichtung nach Anspruch 1, bei welcher ein Teilungsabstand der Förder-, Schub- und/oder Schließkette (22) durch Abnahme jedes zweiten Faltfingers (26) bzw. Schub- oder Faltabschnittes (28) vom an der Kette (22) verbleibenden Trägerabschnitt (34) verdoppelbar ist.

## Claims

1. Folding device (20) for folding over a section or a flap of an outer packaging for articles, such as beverage containers, said folding device (20) comprising at least one conveyor chain, push chain, and/or sealing chain (22), with said chain (22) comprising several pushing or folding elements (24), which are spaced apart from each other and fastened to the chain (22) at defined distances from each other, and which each comprise a pushing or folding section (28) protruding beyond the conveying plane of the chain (22), and said folding device (20) further comprising a coupling device (36) for pivoting the pushing or folding section (28) of the respective pushing or folding elements (24) in connection with a direction change and/or deflection of the conveyor, push, and/or sealing chain (22), each pushing or folding element (24) comprises a carrier section (34), which is connected to the chain (22) and pivotable relative to the direction of chain movement (30) by means of the coupling device (36) and, fastened to this carrier section (34), each pushing or folding element (24) further comprises a pushing or folding section (28), which is toollessly removable from the carrier section (34), **characterized in that** each pushing or folding section (28) is connectable by a form-locking and magnetically locking connection to the carrier section (34) and is toollessly removable from said carrier section (34), wherein a mounting or inserting direction (52) of the pushing or folding section (28) is oriented in perpendicular to the conveying direction (30) of the chain (22) and to the effective direction of the pushing or folding element (24) and wherein the pushing or folding section (28) can be extracted and mounted in a lateral direction to the direction of chain movement.

2. Folding device according to claim 1 wherein the pushing or folding section (28) comprises at least one ferromagnetic section, which cooperates with a permanent magnet arranged in the carrier section (34).

3. Folding device according to claim 2 wherein the ferromagnetic section corresponds to a counterface and/or counter outline on or in the carrier section (34).

4. Folding device according to claim 2 or 3 wherein at least one ferromagnetic bolt (48) at the pushing or folding section (28) corresponds to a receiving section (50) on or in the carrier section (34), at the base of which carrier section (34) a permanent magnet is placed.

5. Folding device according to claim 2 or 3 wherein the pushing or folding section (28) comprises two ferromagnetic bolts (48), which are spaced apart from and arranged in parallel to each other, said ferromagnetic bolts (48) corresponding to appropriately placed receiving sections (50) on the carrier section (34).

6. Folding device according to claim 1 or 2 wherein the separation force for toollessly dismounting the pushing or folding section (28) from the carrier section (34) is greater than a counteracting force exerted by folding or turning over the section or the flap of the outer packaging.

7. Folding device according to claim 1 wherein the pushing or folding sections (28) are in each case formed by folding fingers (26) made of metal, a synthetic material, or a composite material.

8. Folding device according to claim 1 wherein a pitch distance of the conveyor chain, push chain, and/or sealing chain (22) can be doubled by removing every other folding finger (26) or every other pushing or folding section (28) from the carrier section (34), which remains on the chain (22).

## Revendications

1. Dispositif de pliage (20) destiné à replier une section ou une languette d'un suremballage pour des articles tels que récipients de boisson, avec au moins une chaîne de transport, de poussée et/ou de fermeture (22) qui présente une pluralité d'éléments de poussée ou de pliage (24) espacés les uns des autres qui sont fixés chacun sur ladite chaîne (22) à des distances définies les uns des autres et présentent une portion de poussée ou de pliage (28) dépassant un plan de transport de la chaîne (22), et avec un dispositif de couplage (36) pour faire pivoter ladite portion de poussée ou de pliage (28) des éléments de poussée ou de pliage (24) respectifs en liaison avec un changement de direction et/ou un renvoi de la chaîne de transport, de poussée et/ou de fermeture (22), dans lequel chaque élément de poussée ou de pliage (24) présente une portion de support (34) qui est reliée à la chaîne (22) et apte à pivoter, par l'intermédiaire dudit élément de couplage (36), par rapport au sens de marche de la chaîne (30), ainsi que la portion de poussée ou de pliage (28) qui est ancrée sur cette portion de support et peut être détachée sans outil de celle-ci, **caractérisé par le fait que** la portion de poussée ou de pliage (28) respective peut être reliée à engagement positif et magnétique à ladite portion de support (34) et être détachée sans outil de celle-ci, une direction de montage ou d'insertion (52) de la portion de poussée ou de pliage (28) étant orientée perpendiculairement à la direction de transport (30) de la chaîne (22) et à la direction d'action de l'élément de poussée ou de pliage (24), et ladite portion de poussée et de pliage (28) pouvant être retirée et montée latéralement par rapport à la direction de déplacement de la chaîne (22).

2. Dispositif de pliage selon la revendication 1, dans lequel la portion de poussée ou de pliage (28) présente au moins une portion ferromagnétique qui agit de concert avec un aimant permanent qui est disposé dans ladite portion de support (34).

3. Dispositif de pliage selon la revendication 2, dans lequel la portion ferromagnétique correspond avec une contre-surface et/ou un contre-contour sur ou dans ladite portion de support (34).

4. Dispositif de pliage selon la revendication 2 ou 3, dans lequel au moins un boulon ferromagnétique (48) sur la portion de poussée ou de pliage (28) correspond avec un logement (50) sur ou dans la portion de support (34), sur le fond duquel est placé ledit aimant permanent.

5. Dispositif de pliage selon la revendication 2 ou 3, dans lequel la portion de poussée ou de pliage (28) présente deux boulons ferromagnétiques (48) espacés l'un de l'autre et disposés parallèlement qui correspondent avec deux logements (50) sur la portion de support (34) qui sont placés de manière correspondante.

6. Dispositif de pliage selon la revendication 1 ou 2, dans lequel une force de desserrage pour démonter sans outil la portion de poussée ou de pliage (28) de ladite portion de support (34) est supérieure à une force antagoniste lors du pliage ou du rabattement de la section ou de la languette du suremballage.

7. Dispositif de pliage selon la revendication 1, dans lequel les portions de poussée ou de pliage (28) sont formées chacune par des doigts de pliage (26) en métal, en matière plastique ou en un matériau composite.

8. Dispositif de pliage selon la revendication 1, dans lequel une distance de pas de ladite chaîne de transport, de poussée et/ou de fermeture (22) peut être doublée en détachant un(e) sur deux doigts de pliage (26) ou bien portions de poussée ou de pliage (28) de ladite portion de support (34) restant sur la chaîne (22).
